# EUROPEAN PATENT SPECIFICATION

(11) **EP 1 744 087 B1**
(45) Date of publication and mention of the grant of the patent: **10.12.2008**
(21) Application number: 06013910.2
(22) Date of filing: 05.07.2006
(51) Int. Cl.: F16L 3/04, F16L 3/123

(54) **Fastening member for pipes and cables**
Befestigungselement für Rohre und Kabel
Elément de fixation pour des tuyaux ou des câbles

(30) Priority: 12.07.2005 IT VI20050196
(43) Date of publication of application: 17.01.2007
(73) Proprietor: ELLEPI S.R.L., 36078 Valdagno VI (IT)
(72) Inventor: Peserico, Loredana, 36078 Valdagno (Vicenza) (IT)
(74) Representative: Forattini, Amelia

(56) References cited:
- DE-C- 699 892
- FR-A1- 2 353 784
- GB-A- 929 703
- GB-A- 1 472 823
- US-A- 3 758 060
- US-A- 4 264 047
- US-A- 5 350 267
- US-B1- 6 732 982

## Description

The present invention relates to a fastening member for pipes and cables particularly suitable for providing surface-mounted systems.

As is known, there are many kinds of accessory for cable guiding pipes and sheaths currently used in the installation of electrical systems.

These accessories, which range from ordinary collars, clips and U-bolts made of galvanized steel to snap-acting and collar-type pipe supports made of thermoplastic material, are generally all installed with the aid of expansion plugs.

Fitting this kind of accessory accordingly requires the repetition of a series of operations, such as drilling, inserting the plug, centering and placing the clip. Those operations are simple but as a whole affect considerably the production times of systems, especially if it is necessary to install long lines.

In order to reduce those inconveniences and therefore reduce work times, other kinds of accessory for sheaths and pipes have been devised wherein the plug and the clip form a single body, thus making the insertion of the plug in the hole coincide with the placement of the clip.

Although advantageous, such systems have a substantial drawback linked to the possibility of an accidental off-center placement of the hole during its drilling.

If the hole is drilled in the wrong point, and one does not wish to tolerate the incorrect alignment of the sheaths that protect the system, since the clip is monolithic with the expansion plug and consequently cannot be adjusted in its position with respect to the plug, it is generally necessary to drill a new hole, with all the consequent inconveniences and delays.

Examples of prior art devices that show the above described drawback are the following.

US-3758060 discloses a cable fastener comprising a flexible strap for clamping cables to a wall where a hole has been previously drilled.

US-4264047 discloses a brake and fuel line clip comprising a clamp portion and a pin extending axially in the clamp portion for fastening the clip to a surface.

GB-929703 discloses a fastener for securing wires and cables to a surface; the fastener is constituted by a flexible strap and by a stud.

GB-1472823 discloses a fastener for securing a cable or tube to a wall where a hole has been previously drilled.

The aim of the invention is to solve the problems described above, by providing a fastening member for pipes and cables that allows to reduce its installation times and at the same time allows to very easily correct any mistakes in its positioning.

Within the scope of this aim, an object of the invention is to provide a fastening member for pipes and cables that complies with the necessary safety standards.

Another object of the invention is to provide a fastening member for pipes and cables that can be manufactured simply and at competitive costs.

This aim and these and other objects, which will become better apparent hereinafter, are achieved by a fastening member for pipes and cables, comprising a clamp-type support and an expansion plug, said clamp-type support being made of thermoplastic material and comprising a base having a through opening and from which at least one supporting claw protrudes, characterized in that it comprises a breakable connecting means adapted to detachably and monolithically join said expansion plug and said clamp-type support at said through opening, said through opening having a substantially elliptical shape.

Further characteristics and advantages will become better apparent from the description of a preferred but not exclusive embodiment of a fastening member for pipes and cables according to the invention, illustrated by way of non-limiting example in the accompanying drawings, wherein:
Figure 1 is a perspective view of a fastening member for pipes and cables according to the invention;
Figure 2 is a bottom view of a fastening member for pipes and cables, applied to a portion of a protective sheath and ready for installation according to a first configuration;
Figure 3 is a bottom view of a fastening member for pipes and cables, applied to a portion of protective sheath and ready for installation according to a second configuration;
Figure 4 is a sectional side view of the fastening member for pipes and cables shown in Figure 2, installed on a wall;
Figure 5 is a sectional side view of the fastening member for pipes and cables shown in Figure 3, installed on a wall.

With reference to the cited figures, a fastening member for pipes and cables, generally designated by the reference numeral 1, comprises a clamp-type support 2, which is made of thermoplastic, optionally self-extinguishing, material and an expansion plug 3, which is equally of the screw or abutment type according to the requirements.

The clamp-type support 2, which can be a clip, snap or collar, in the embodiment described hereinafter is shaped like a usual snap-acting clip and therefore is constituted by a base 4, from which two supporting claws 5a and 5b protrude. The claws are slightly arc-like in order to be able to partially surround a tubular sheath 20, engaging it with a snap action.

A substantially elliptical through opening 6 is provided centrally with respect to the base 4, and on the two opposite front faces 7a and 7b there are respectively engagement members 8a, 8b and 9a, 9b, which allow to detachably engage, by snap action, two or more contiguous clamp-type supports 2.

Each engagement member includes a male portion, respectively 8a and 9a, which is substantially half as long as the corresponding front face, and a female portion, respectively 8b and 9b, which is also substantially half as long as the corresponding front face.

The two female portions 8b and 9b, whose transverse cross-section is substantially complementary to the cross-section of the male portion 8a and 9a, are arranged so that the female portion 9b lies opposite the male portion 8a and, vice versa, the male portion 9a lies opposite the female portion 8b.

According to the invention, the fastening member has a prefractured connecting means, constituted by multiple joints 10a, 10b, 10c and 10d, formed between the surface 11, which can rest against a wall, of the base 4, and the end 12 of the expansion plug 3, which protrudes from a hole 21 formed in the wall.

The joints 10, which are adapted to detachably and monolithically connect the expansion plug 3 to the base 4 of the clamp-type support 2, keeping the longitudinal axis of the former substantially coaxial to the center of the through opening 6, may be broken very simply, if necessary, either by twisting with sufficient torque the expansion plug 3 with respect to the clamp-type support 2 or by striking with the necessary force the base 4 of the latter after inserting the expansion plug 3 in the hole 21.

The joints 10, which are sized and shaped so as to avoid accidental breakages, due to their particular configuration with a substantially triangular longitudinal cross-section, are also designed to prevent any unwanted rotations of the expansion plug 3 in the hole 21 during the tightening of the screw 22.

The operation of the fastening member 1 according to the invention is as follows.

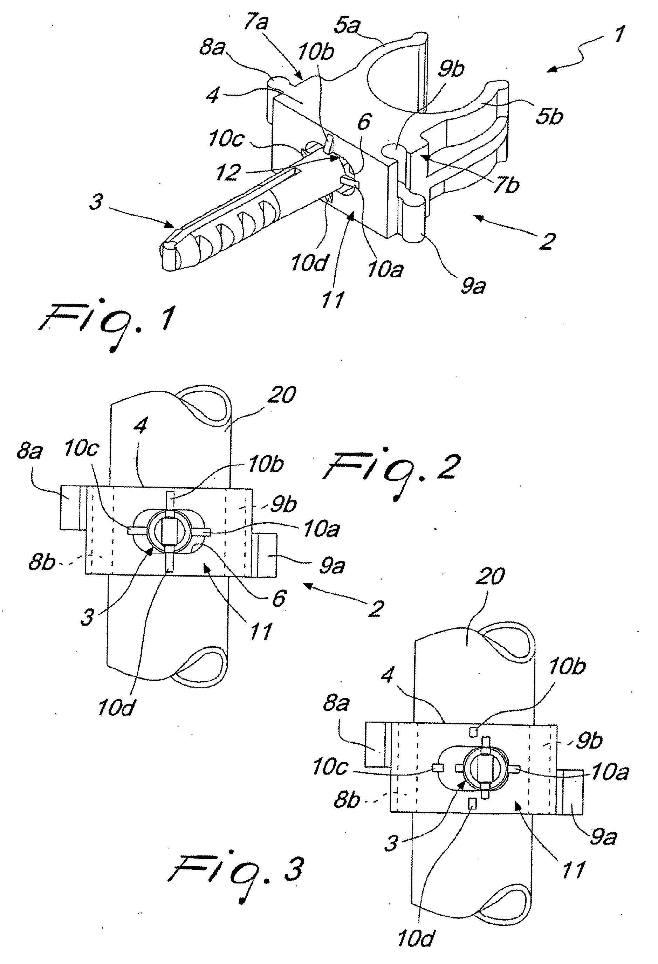

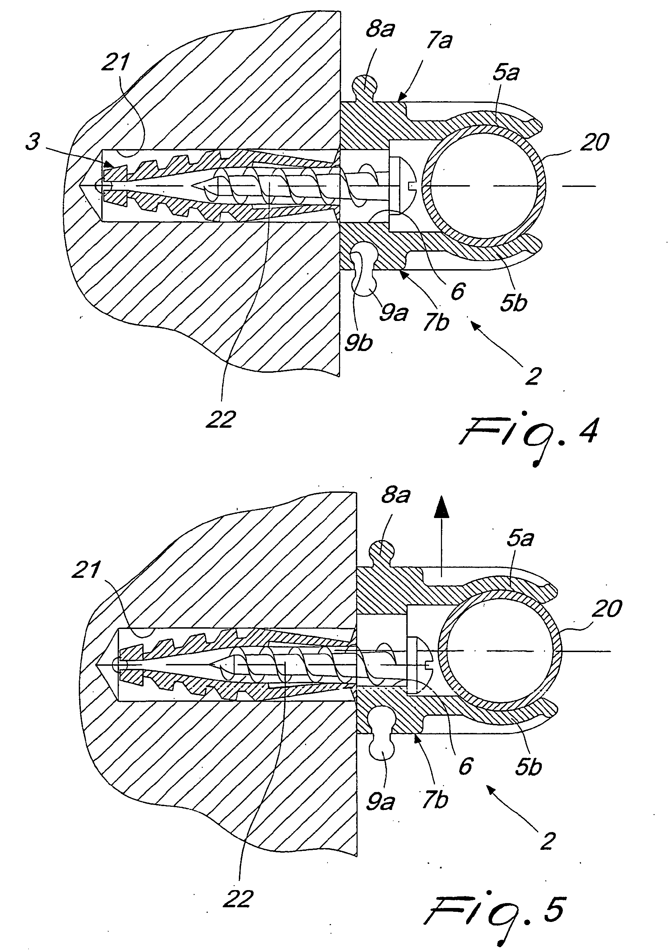

In order to provide a surface-mounted system, after tracing it correctly on the wall, locating in particular the points where each fastening member 1 is to be positioned, it is sufficient to provide a dead hole 21 thereat for the insertion of the expansion plug 3, which at least initially is monolithic with the clamp-type support 2, and then tighten the screw 22, as shown in Figures 2 and 4.

If the hole is accidentally axially offset with respect to one of the located points, a circumstance which would cause the incorrect alignment of the tubular sheaths that constitute the surface-mounted system, it is sufficient to twist the expansion plug 3 with respect to the clamp-type support 2, applying a torque sufficient to break the joints 10 and consequently cause the separation of the two members, insert the former in the hole 21 and then center the clamp-type support 2, utilizing the elliptical shape of the through opening 6, before inserting and tightening the screw 22.

In order to deal with the same problem even more simply, it is possible to insert the expansion plug 3 in the hole 21, insert the screw 22 through the through opening 6, merely pointing it, strike with the necessary force the base 4 of the clamp-type support 2, using for example a hammer or the handle of a screwdriver, again causing the breakage of the joints 10 and consequently separating the expansion plug 3 from the clamp-type support 2, center the support, by utilizing the elliptical shape of the through opening 6, and end by tightening the screw 22.

In practice it has been found, therefore, that the fastening member for pipes and cables according to the invention fully achieves the intended aim and objects, by considerably reducing its installation times and at the same time allowing to correct any errors in its positioning with particular ease.

The fastening member for pipes and cables according to the invention is compliant with the necessary safety standards, is simple to manufacture and can be produced at competitive costs.

The fastening member for pipes and cables thus conceived is susceptible of numerous modifications and variations, within the scope of the appended claims.

## Claims

1. A fastening member for pipes and cables, comprising a clamp-type support (2) and an expansion plug (3), said clamp-type support (2) being made of thermoplastic material and comprising a base (4) having a through opening (6) and from which at least one supporting claw (5a, 5b) protrudes, **characterized in that** it comprises a breakable connecting means (10a, 10b, 10c, 10d) adapted to detachably and monolithically join said expansion plug (3) and said clamp-type support (2) at said through opening (6), said through opening (6) having a substantially elliptical shape.

2. The fastening member for pipes and cables according to claim 1, **characterized in that** said breakable connecting means comprises multiple joints (10a, 10b, 10c, 10d), said joints (10a, 10b, 10c, 10d) being formed between the surface (11) of said base (4) that can rest against a wall and the end (12) of said expansion plug (3) that is designed to protrude from a hole (21) provided in said wall.

3. The fastening member for pipes and cables according to one or more of the preceding claims, **characterized in that** said joints (10a, 10b, 10c, 10d) have a substantially triangular longitudinal cross-section in order to prevent the accidental rotation of said expansion plug (3) in said hole (21).

4. The fastening member for pipes and cables according to one or more of the preceding claims, **characterized in that** the longitudinal axis of said expansion plug (3) is substantially coaxial to the center of said through opening (6).

5. The fastening member for pipes and cables according to one or more of the preceding claims, **characterized in that** said base (4) comprises engagement members (8a, 8b, 9a, 9b) detachably engaging contiguous clamp-type supports (2) by snap action.

6. The fastening member for pipes and cables according to claim 5 **characterized in that** said engagement members (8a, 8b, 9a, 9b) are formed on the two opposite front faces (7a, 7b) of said base (4).

7. The fastening member for pipes and cables according to claim 5 or 6, **characterized in that** each one of said engagement members (8a, 8b, 9a, 9b) comprises a male portion (8a, 9a), whose length is substantially half the total length, and a female portion 8b, 9b), whose length is substantially half the total length and with a transverse cross-section that is substantially complementary to the cross-section of the male portion.

8. The fastening member for pipes and cables according to one or more of the preceding claims, **characterized in that** each male portion (8a) formed on one of said two front faces (7a) is matched by a female portion (9b) formed on the opposite front face (7b).

9. The fastening member for pipes and cables according to one or more of the preceding claims, **characterized in that** said clamp-type support (2) and said plug (3) are made of self-extinguishing material.

## Patentansprüche

1. Befestigungselement für Rohre und Kabel, umfassend eine klammerartige Halterung (2) und einen Spreizdübel (3), wobei die klammerartige Halterung (2) aus einem thermoplastischen Material besteht und eine Basis (4) umfasst, die eine Durchgangsöffnung (6) aufweist und von der zumindest eine Haltebacke (5a, 5b) vorspringt, **dadurch gekennzeichnet, dass** es ein zerbrechliches Verbindungsmittel (10a, 10b, 10c, 10d) umfasst, das dazu geeignet ist, den Spreizdübel (3) und die klammerartige Halterung (2) an der Durchgangsöffnung (6) lösbar und monolithisch zu verbinden, wobei die Durchgangsöffnung (6) eine im Wesentlichen elliptische Form aufweist.

2. Befestigungselement für Rohre und Kabel nach Anspruch 1, **dadurch gekennzeichnet, dass** das zerbrechliche Verbindungsmittel mehrere Verbindungsstücke (10a, 10b, 10c, 10d) umfasst, wobei die Verbindungsstücke (10a, 10b, 10c, 10d) zwischen der Fläche (11) der Basis (4), die an einer Wand ruhen kann, und dem Ende (12) des Spreizdübels (3), das dazu gestaltet ist, aus einem in der Wand bereitgestellten Loch (21) vorzuspringen, gebildet sind.

3. Befestigungselement für Rohre und Kabel nach einem oder mehreren der vorhergehenden Ansprüche, **dadurch gekennzeichnet, dass** die Verbindungsstücke (10a, 10b, 10c, 10d) einen im Wesentlichen dreieckigen Längsquerschnitt aufweisen, um eine unbeabsichtigte Drehung des Spreizdübels (3) im Loch (21) zu verhindern.

4. Befestigungselement für Rohre und Kabel nach einem oder mehreren der vorhergehenden Ansprüche, **dadurch gekennzeichnet, dass** die Längsachse des Spreizdübels (3) im Wesentlichen mit der Mitte der Durchgangsöffnung (6) koaxial ist.

5. Befestigungselement für Rohre und Kabel nach einem oder mehreren der vorhergehenden Ansprüche, **dadurch gekennzeichnet, dass** die Basis (4) Eingreifelemente (8a, 8b, 9a, 9b) umfasst, die durch einen Schnapp- oder Rastvorgang lösbar in angrenzende klammerartige Halterungen (2) eingreifen.

6. Befestigungselement für Rohre und Kabel nach Anspruch 5, **dadurch gekennzeichnet, dass** die Eingreifelemente (8a, 8b, 9a, 9b) an den zwei entgegengesetzten Vorderflächen (7a, 7b) der Basis (4) gebildet sind.

7. Befestigungselement für Rohre und Kabel nach Anspruch 5 oder 6, **dadurch gekennzeichnet, dass** jedes der Eingreifelemente (8a, 8b, 9a, 9b) einen Steckabschnitt (8a, 9a), dessen Länge im Wesentlichen die Hälfte der Gesamtlänge ist, und einen Aufnahmeabschnitt (8b, 9b), dessen Länge im Wesentlichen die Hälfte der Gesamtlänge ist, und der einen zu dem Querschnitt des Steckabschnitts im Wesentlichen komplementären querverlaufenden Querschnitt aufweist, umfasst.

8. Befestigungselement für Rohre und Kabel nach einem oder mehreren der vorhergehenden Ansprüche, **dadurch gekennzeichnet, dass** jeder Steckabschnitt (8a), der an einer der beiden Vorderflächen (7a) gebildet ist, zu einem Aufnahmeabschnitt (9b), der an der entgegengesetzten Vorderfläche (7b) gebildet ist, passt.

9. Befestigungselement für Rohre und Kabel nach einem oder mehreren der vorhergehenden Ansprüche, **dadurch gekennzeichnet, dass** die klammerartige Halterung (2) und die Basis (3) aus einem selbstverlöschenden Material bestehen.

## Revendications

1. Elément de fixation pour tuyaux et câbles, comprenant un support de type bride (2) et une cheville expansible (3), ledit support de type bride (2) étant réalisé en un matériau thermoplastique et comprenant une base (4) comportant une ouverture traversante (6) et de laquelle au moins une griffe de support (5a, 5b) fait saillie, **caractérisé en ce qu'**il comprend des moyens de liaison cassables (10a, 10b, 10c, 10d) adaptés pour joindre de manière détachable et de manière monolithique ladite cheville expansible (3) et ledit support de type bride (2) au niveau de ladite ouverture traversante (6), ladite ouverture traversante (6) ayant une forme sensiblement elliptique.

2. Elément de fixation pour tuyaux et câbles selon la revendication 1, **caractérisé en ce que** lesdits moyens de liaison cassables comprennent de multiples articulations (10a, 10b, 10c, 10d), lesdites articulations (10a, 10b, 10c, 10d) étant formées entre la surface (11) de ladite base (4) qui peut reposer contre une paroi et l'extrémité (12) de ladite cheville expansible (3) qui est conçue pour faire saillie d'un trou (21) prévu dans ladite paroi.

3. Elément de fixation pour tuyaux et câbles selon une ou plusieurs des revendications précédentes, **caractérisé en ce que** lesdites articulations (10a, 10b, 10c, 10d) ont une section transversale longitudinale sensiblement triangulaire afin d'empêcher la rotation accidentelle de ladite cheville expansible (3) dans ledit trou (21).

4. Elément de fixation pour tuyaux et câbles selon une ou plusieurs des revendications précédentes, **caractérisé en ce que** l'axe longitudinal de ladite cheville expansible (3) est sensiblement coaxial au centre de ladite ouverture traversante (6).

5. Elément de fixation pour tuyaux et câbles selon une ou plusieurs des revendications précédentes, **caractérisé en ce que** ladite base (4) comprend des éléments de mise en prise (8a, 8b, 9a, 9b) venant en prise de manière détachable avec des supports de type bride (2) contigus par une action de pression.

6. Elément de fixation pour tuyaux et câbles selon la revendication 5, **caractérisé en ce que** lesdits éléments de mise en prise (8a, 8b, 9a, 9b) sont formés sur les deux faces avant (7a, 7b) opposées de ladite base (4).

7. Elément de fixation pour tuyaux et câbles selon la revendication 5 ou 6, **caractérisé en ce que** chacun desdits éléments de mise en prise (8a, 8b, 9a, 9b) comprend une partie mâle (8a, 9a), dont la longueur est sensiblement égale à la moitié de la longueur totale, et une partie femelle (8b, 9b), dont la longueur est sensiblement égale à la moitié de la longueur totale et dont la section transversale est sensiblement complémentaire de la section transversale de la partie mâle.

8. Elément de fixation pour tuyaux et câbles selon une ou plusieurs des revendications précédentes, **caractérisé en ce que** chaque partie mâle (8a) formée sur l'une desdites deux faces avant (7a) correspond à une partie femelle (9b) formée sur la surface avant (7b) opposée.

9. Elément de fixation pour tuyaux et câbles selon une ou plusieurs des revendications précédentes, **caractérisé en ce que** ledit support de type bride (2) et ladite cheville (3) sont réalisés en un matériau auto-extincteur.
